# EUROPEAN PATENT SPECIFICATION

(11) **EP 3 396 231 B1**
(45) Date of publication and mention of the grant of the patent: **02.12.2026**
(21) Application number: 16879312.3
(22) Date of filing: 21.12.2016
(51) Int. Cl.: F21L 17/00, F21K 9/60, F21Y 101/00, F21S 41/00, F21S 43/00, C09K 11/02, F21S 41/148, F21S 41/151, F21S 41/16, F21S 41/176, C03C 4/12, F21S 41/32, F21S 41/155

(54) **PHOSPHOR PLATE AND MANUFACTURING METHOD THEREFOR**
LEUCHTSTOFFPLATTE UND HERSTELLUNGSVERFAHREN DAFÜR
PLAQUE AU LUMINOPHORE ET SON PROCÉDÉ DE FABRICATION

(30) Priority: 22.12.2015 KR 20150183648
(43) Date of publication of application: 31.10.2018
(73) Proprietor: LG Innotek Co., Ltd., 98 Huam-ro, Jung-gu Seoul 04637 (KR)
(72) Inventor: WON, Ju Yeon, Seoul 04637 (KR); YANG, Eui Yeol, Seoul 04637 (KR); LEE, In Jae, Seoul 04637 (KR)
(74) Representative: M. Zardi & Co S.A.
(86) International application number: PCT/KR2016/014967
(87) International publication number: WO 2017/111445

(56) References cited:
- EP-A1- 2 942 824
- WO-A1-2012/058040
- WO-A1-2013/148783
- JP-A- 2013 219 123
- KR-A- 20140 057 932
- KR-A- 20150 091 614
- KR-B1- 101 559 279
- US-A1- 2013 228 800
- US-A1- 2015 008 816

## Description

### [Technical Field]

The present invention relates to a phosphor plate in which transmissivity and scattering rate are improved.

### [Background Art]

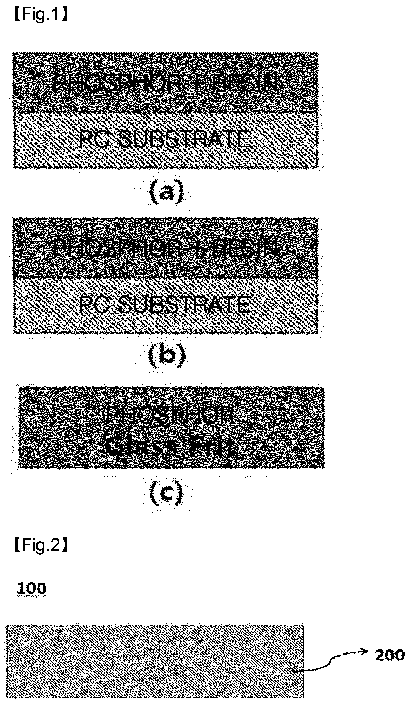

Conventional phosphor plates are mainly divided into three types of phosphor plates as illustrated in FIG. 1. The conventional phosphor plates include i) a phosphor plate in which a phosphor and a binder resin are mixed on a polycarbonate (PC) substrate as shown in FIG. 1A, ii) a phosphor plate in which a phosphor and a binder resin are mixed on a glass substrate as shown in FIG. 1B, and iii) a phosphor plate c in which a glass frit and a phosphor are mixed as shown in FIG. 1C.

In the case of i) the phosphor plate, the phosphor plate is flexible so that it is possible to form various shapes, but there are disadvantages in that thermal stability is low and it is difficult to form a uniform thickness. In the case of ii) the phosphor plate, the phosphor plate has disadvantages in that forming various shapes is difficult, and the phosphor is damaged at high temperatures. In the case of iii) the phosphor plate, the phosphor plate has improved thermal stability, but there are problems in that it is difficult to form various shapes, dispersibility of the phosphor is low such that beam angle distribution is reduced, and a sintering process is complex such that a severe loss of raw material of 50% or more occurs.

Examples of phosphor plates according to the prior art are known from WO 2013/148783, EP 2942824 and US 2015/008816.

### [Disclosure]

### [Technical Problem]

The present invention is directed to providing a phosphor plate in which various shapes may be formed, a manufacturing process is simplified, and transmissivity and a beam angle are improved.

### [Technical Solution]

According to the present invention there are provided a phosphor plate according to clam 1, a vehicle head lamp according to claim 4 and a manufacturing method according to claim 7.

One aspect as disclosed provides a phosphor plate including a sintered layer in which a mixture including an inorganic phosphor and glass frit is sintered, wherein the sintered layer further includes voids therein.

A size of each of the voids ranges from 0.5 microns to 10 microns, and the voids may be included in the sintered layer at a volume of 2% to 4% of a total volume of the sintered layer.

The glass frit may range from 20 to 50 parts by weight based on 100 parts by weight of the sintered layer.

A thickness of the sintered layer may range from 100 µm to 200 µm.

One aspect as disclosed provides a vehicle head lamp including: a light emitting unit; a phosphor plate disposed on a light emitting path of the light emitting unit; and a reflector configured to reflect light converted and emitted by the phosphor plate, wherein the phosphor plate includes a sintered layer in which a mixture including an inorganic phosphor and glass frit is sintered, and further includes voids therein
A size of each of the voids ranges from 0.5 microns to 10 microns, and the voids may be included in the sintered layer at a volume of 2% to 4% of a total volume of the sintered layer.

The glass frit may range from 20 to 50 parts by weight based on 100 parts by weight of the sintered layer.

A thickness of the sintered layer may range from 100 µm to 200 µm.

One aspect as disclosed provides a manufacturing method of a phosphor plate including: mixing an inorganic phosphor, glass frit, a binder resin, and an additive to generate a mixture; performing a burnout operation on the mixture to remove residual carbon and form circular voids; and f sintering the mixture, on which the burnout operation is performed, to form a sintered layer.

The phosphor plate may include the glass frit at 20 wt% to 50 wt% and the binder resin at 10 wt% to 30 wt%.

The binder resin may be one or more selected from among a polyvinyl alcohol (PVA) based polymer, a polyvinyl butyral (PVB) based polymer, and an acryl based polymer.

The manufacturing method may further include, after the generation of the mixture, applying the mixture onto a polymer film, drying the mixture applied onto the polymer film, and removing the polymer film from the dried mixture.

The burnout operation may be performed at 200 °C to 500 °C in the formation of the void.

A size of each of the voids may range from 0.5 microns to 10 microns, and the voids may be included in the sintered layer at a volume of 2% to 4% of a total volume of the sintered layer.

A thickness of the sintered layer may range from 100 µm to 200 µm.

### [Advantageous Effects]

According to embodiments as disclosed, a phosphor plate of the present invention has an effect in that transmissivity and a beam angle are superior to those of a conventional phosphor plate.

In addition, the phosphor plate can be manufactured through a simple manufacturing process and formed in various shapes.

In addition, the phosphor plate can be easily utilized in a vehicle head lamp requiring a beam angle and thermal stability because of the above-described effects.

### [Description of Drawings]

FIG. 1 is a view illustrating a conventional phosphor plate.
FIG. 2 is a cross-sectional view illustrating a phosphor plate according to an embodiment as disclosed.
FIG. 3 is an image showing voids of the conventional phosphor plate and voids of the phosphor plate according to the embodiment as disclosed.
FIGS. 4A and 4B are graphs of a beam angle of the conventional phosphor plate and a beam angle of the phosphor plate according to the embodiment as disclosed.
FIG. 5 is a graph of an optical property of the phosphor plate according to the embodiment as disclosed.
FIGS. 6 and 7 are conceptual views illustrating a light emitting package in which the phosphor plate according to the embodiment as disclosed is utilized.
FIG. 8 is a conceptual view illustrating a vehicle head lamp in which the light emitting package according to the embodiment as disclosed is utilized.

### [Modes of the Invention]

Hereinafter, exemplary embodiments of the present invention that are easily performed by those skilled in the art will be described in detail with reference to the accompanying drawings. However, the embodiments described in this specification and configurations illustrated in drawings are only examples of the disclosed invention, and it is understood that the present invention covers various modifications that can substitute the embodiments and drawings herein at the time of filing of this application. In addition, in detailed descriptions of operating principles of the exemplary embodiments of the present invention, when it is determined that detailed descriptions of related well-known functions and configurations unnecessarily obscure the gist of the present invention, the detailed descriptions thereof will be omitted. Some terms described below are defined in consideration of functions of the present invention, and the meanings of the terms should be interpreted based on scope throughout this specification.

FIG. 2 is a cross-sectional view illustrating a phosphor plate according to an embodiment. As illustrated in FIG. 2, a phosphor plate 100 of the present invention may include a sintered layer 200 including an inorganic phosphor, glass frit, and a binder resin.

A polymer binder resin according to the embodiment of the present invention may be a polyvinyl alcohol (PVA)-based binder resin, a polyvinyl butyral (PVB)-based binder resin, and an acryl-based binder resin. The acryl-based binder resin may be preferable as the polymer binder resin according to the embodiment of the present invention, in consideration of an aspect of thermal stability and an aspect of ease of manufacturing. That is, the inorganic phosphor can convert the wavelength of light to provide light of various colors.

The inorganic phosphor according to the embodiment may be one phosphor among a yellow phosphor, a green phosphor, or a red phosphor, according to optical properties and a color of lighting required for the phosphor plate 100 and to a utilization field of the phosphor plate 100, and may be a phosphor of two or more types configured to excite light having different wavelengths as necessary.

The inorganic phosphor may include an yttrium aluminium garnet (YAG)-based inorganic phosphor, a lutetium aluminium garnet (LuAG)-based inorganic phosphor, a nitride-based inorganic phosphor, a sulfide-based inorganic phosphor, or a silicate-based inorganic phosphor. Preferably, the inorganic phosphor may include a LuAG-based inorganic phosphor and a nitride-based inorganic phosphor which have low reactivity with the glass frit and high stability at high temperatures. However, since the inorganic phosphor may be changed according to required optical properties, the inorganic phosphor is not limited thereto.

The sintered layer 200 may include the inorganic phosphor at 5 wt% to 30 wt%. Here, a content of the inorganic phosphor may be slightly changed according to transmittance and color difference. In addition, the content of the inorganic phosphor may also be changed according to a thickness of the sintered layer 200. For example, when a thickness of the sintered layer increases, a small amount of inorganic phosphor may be added thereto.

The glass frit according to the embodiment may have low reactivity with the inorganic phosphor. The glass frit may be a B₂O₃-SiO₂-based glass frit, a BaO-B₂O₃-SiO₂-based glass frit, or a ZnO-B₂O₃-SiO₂-based glass frit which are easily mixed with a binder. Preferably, the glass frit may be a ZnO-B₂O₃-SiO₂-based glass frit. It is preferable that the glass frit range from 20 parts to 50 parts by weight based on 100 parts by weight of the sintered layer.

The phosphor plate 100 may be formed by applying and drying a mixture in which an inorganic phosphor, the glass frit, and the binder resin are mixed on a polymer film, removing the polymer film, and sintering the mixture to from the sintered layer 200.

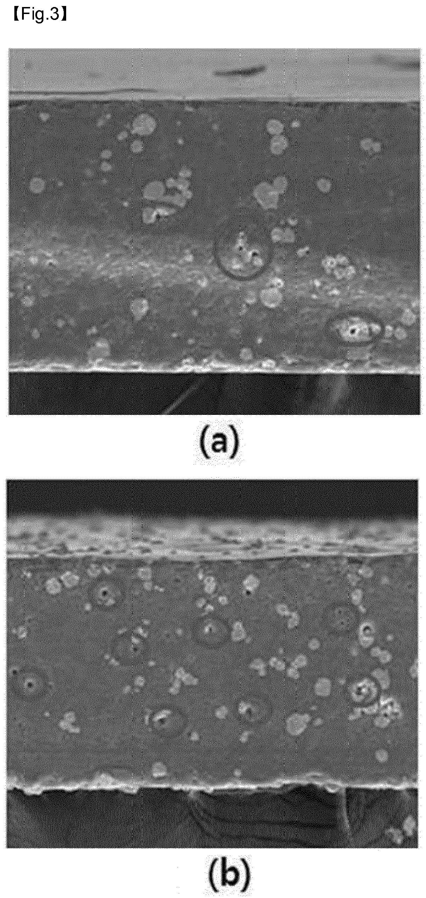

FIG. 3 is an image showing voids of the conventional phosphor plate and voids of the phosphor plate according to an embodiment.

Referring to FIG. 3, FIG. 3A is a view illustrating voids of a phosphor plate (see FIG. 1C) including only the glass frit and the inorganic phosphor, and FIG. 3B is a view illustrating voids of the phosphor plate including the sintered layer 200 according to the embodiment of the present invention. Referring to FIG. 3B, the sintered layer according to the embodiment may include circular voids. In FIG. 3A, the voids (in circles) are formed in irregular shapes and distributions at interfaces of the inorganic phosphor and the glass, but in FIG. 3B, the voids having a predetermined size are formed in a predetermined shape and distribution despite the inorganic phosphor in the phosphor plate 100.

The voids may be formed during a binder burnout operation before a sintering operation according to the embodiment. The voids may improve a scattering property of the phosphor plate 100. That is, the voids may diffuse light so that the phosphor plate 100 has a uniform beam angle. Accordingly, when the number of voids is too small, an unsatisfactory scattering property may be obtained, and when the number of voids is too large, problems of transmissivity and reliability may occur.

Accordingly, it is preferable that the voids be included in the sintered layer at a volume of 2% to 4% of a total volume of the sintered layer. when the volume of the voids is less than 2% of the total volume of the sintered layer, the scattering property is insufficient, and when the volume is larger than 4%, the transmissivity and reliability are degraded.

Here, it is preferable that a size of the void range from 0.5 microns to 10 microns. In a case in which a size of the void is less than 0.5 microns, an unsatisfactory scattering property is obtained, and when a size of the void is greater than 10 microns, there is a problem in that transmissivity is low. A size (diameter) to volume ratio of the voids may be adjusted by changing burnout conditions.

It is preferable that a thickness of the sintered layer 200 range from 100 µm to 200 µm. Although the thickness is not limited thereto, it may be preferable that the thickness range from 100 µm to 200 µm to increase transmissivity and make the sintered layer 200 thinner. Forming a thin sintered layer 200 may be one feature of the present invention. Although the phosphor plate (see FIG. 1C) in which conventional glass frit and an inorganic phosphor are mixed requires a thickness of 2 mm or more for implementation of color and thermal stability, since the phosphor plate of the present invention obtains a uniform scattering property of the inorganic phosphor by mixing the binder as described above, just a small amount of the inorganic phosphor may be used. Accordingly, there is an advantage in that a total thickness of the phosphor plate may decrease.

As described above, a scattering property of the phosphor plate 100 according to the embodiment of the present invention is superior to that of the phosphor plate (see FIG. 1C) in which the conventional glass frit and the inorganic phosphor are mixed. The following Table 1 shows a beam angle test result of the phosphor plate (Example) which is the embodiment as disclosed and a conventional phosphor plate (Comparative Example, see FIG. 1C).

**[Table 1]**

| Division | Angle | 60° | | 80° | |
|---|---|---|---|---|---|
| | Phi | ΔCx | ΔCy | ΔCx | ΔCy |
| Comparative Example (Ave.) | | 0.018 | 0.036 | 0.033 | 0.066 |
| Example (Ave.) | | 0.016 | 0.030 | 0.022 | 0.044 |

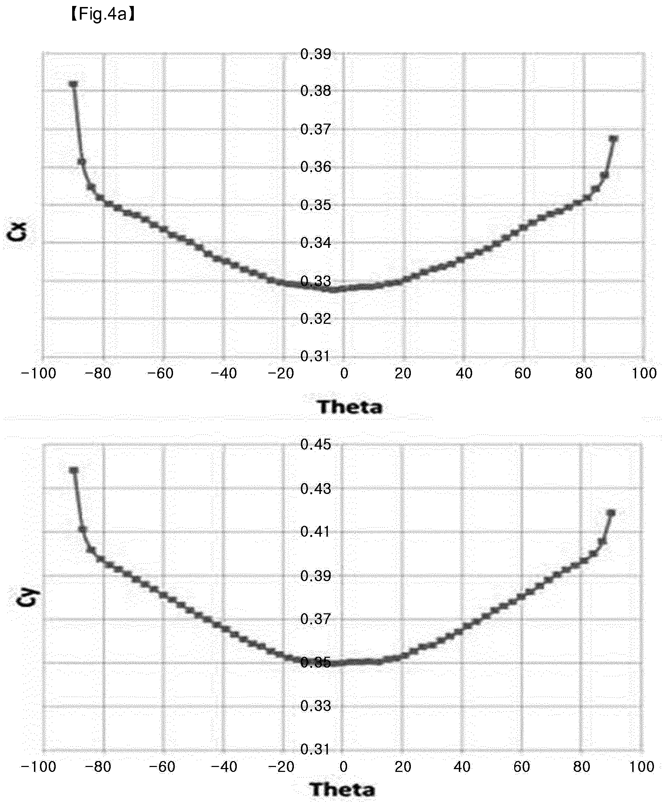

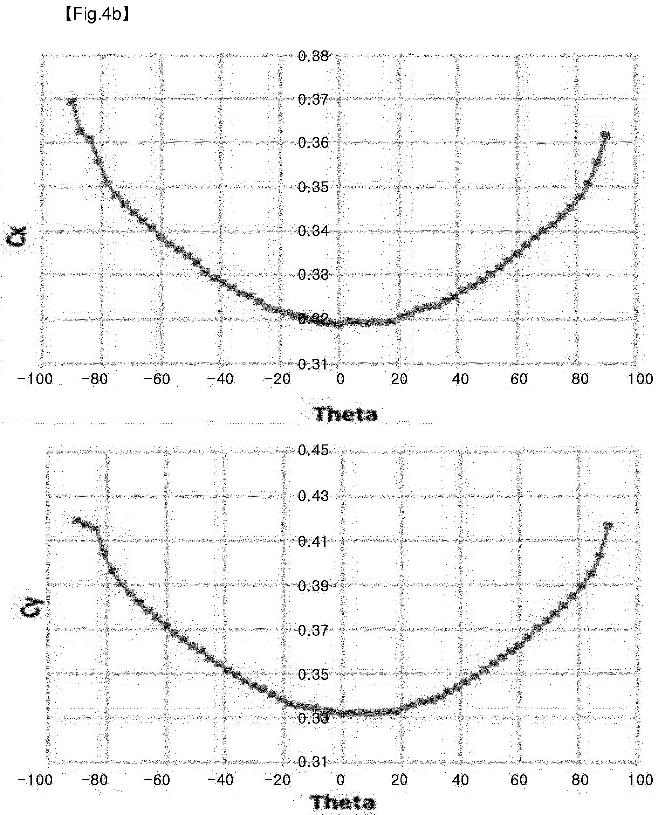

FIGS. 4A and 4B are graphs of a beam angle of the conventional phosphor plate and a beam angle of the phosphor plate according to the embodiment as disclosed.

As shown in Table 1 and FIGS. 4A and 4B (FIG. 4A is a view of Comparative Example, and FIG. 4B is a view of Example), ΔCx and ΔCy values of Example decrease when angles are 60° and 80°. That is, in the phosphor plate according to the embodiment, since a fluctuation range of a beam angle decreases, a correlated color temperature (CCT) may be implemented by a front surface of a light emission part and a similar CCT may also be implemented by a side surface thereof.

As describe above, the phosphor plate 100 according to the embodiment may provide optical properties superior to those of the phosphor plate (see FIG. 1C) in which a conventional glass frit and inorganic phosphor are mixed. The following Table 2 shows an optical property test result of the phosphor plate (Example) which is the embodiment as disclosed and the conventional phosphor plate (Comparative Example, see FIG. 1C).

**[Table 2]**

| Division | | | Comparative Example (Ref) | | Example (Sheet) | |
|---|---|---|---|---|---|---|
| Optical Properties (n=3) | | lm | | 360 | | 368 |
| | | Cx | | 0.3264 | | 0.3287 |
| | | Cy | | 0.3375 | | 0.3377 |
| | | CCT K | | 5774 | | 5669 |

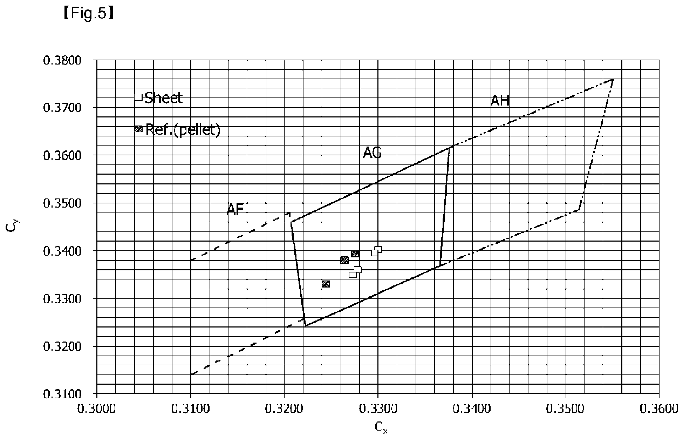

FIG. 5 is a graph of optical properties of the phosphor plate according to the embodiment.

As shown in Table 2 and FIG. 5, optical properties of Example are superior to those of Comparative Example by 1% or more. In addition, a CCT of Example is closer to natural light (5700K) than that of Comparative Example, and here, being closer to the natural light means reduced fatigue of the human eye.

The phosphor plate 100 according to the embodiment may be manufactured through a manufacturing method including a first operation in which the inorganic phosphor, the glass frit, the binder resin, a dispersant, a plasticizer, a solvent, and the like are mixed to form a mixture, a second operation in which the mixture is applied on the polymer film, a third operation in which the mixture applied on the polymer film is dried at room temperature to 100 °C, a fourth operation in which the dried mixture film is removed, residual carbon is removed, and circular voids are formed by performing a burnout operation at 200 to 500 °C, and a fifth operation in which the mixture on which the burnout operation are performed is sintered at 550 to 700 °C to form the sintered layer.

In the manufacturing method of the phosphor plate 100 according to the embodiment, a process of mixing and dispersing the inorganic phosphor may be easier than that of the conventional phosphor plate (see FIG. 1C). In addition, since mixing (dispersing) in the manufacturing method of the phosphor plate according to the embodiment is easy, there is an advantage in that loss of inorganic phosphor is significantly decreased. In addition, since a pressing operation before a sintering operation or a polishing operation after the sintering operation may not be performed, productivity may be increased due to a simplified manufacturing process.

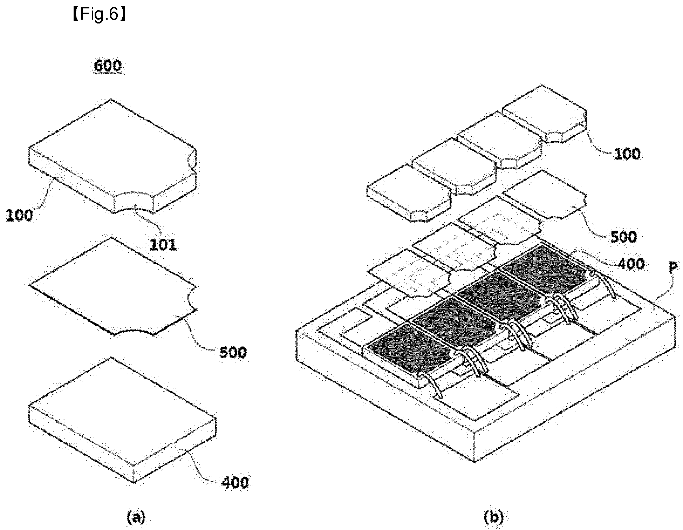

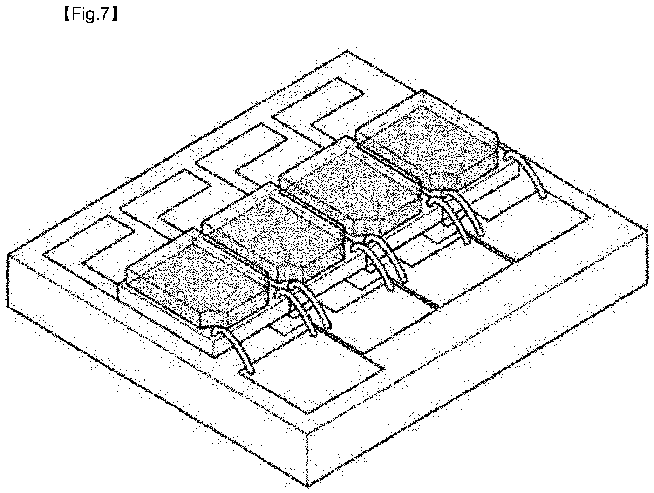

FIG. 6A is a conceptual view illustrating a light emitting package 600 including the phosphor plate 100 according to the embodiment as disclosed, FIG. 6B is a conceptual view illustrating the light emitting package 600 before the light emitting package 600 is mounted on a printed circuit board (PCB) P, and FIG. 7 is a view illustrating the light emitting package mounted on the PCB P.

As illustrated in FIG. 6A, the light emitting package 600 may include the phosphor plate 100, an adhesive member 500, and a light emitting unit 400. The adhesive member 500 may be interposed between the light emitting unit 400 and the phosphor plate 100. Grooves 101 through which the PCB P and the light emitting unit 400 are electrically connected may be formed in the phosphor plate 100 and the adhesive member 500. The light emitting unit 400 may be one selected from among a light emitting diode (LED), an organic light emitting diode (OLED), a laser diode (LD), a laser, and a vertical cavity surface emitting laser (VCSEL). The adhesive member 500 is a component acting as an example of the present invention and is not necessarily a required component, and the light emitting package 600 may also be formed without a separate adhesive member when an adhesion function is added to the binder of the phosphor plate.

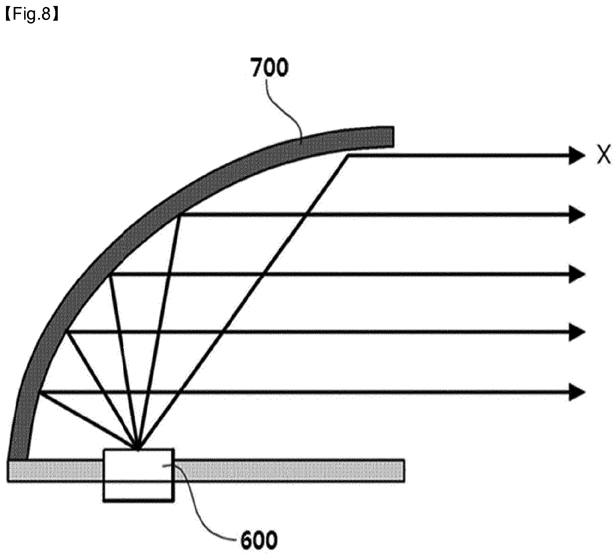

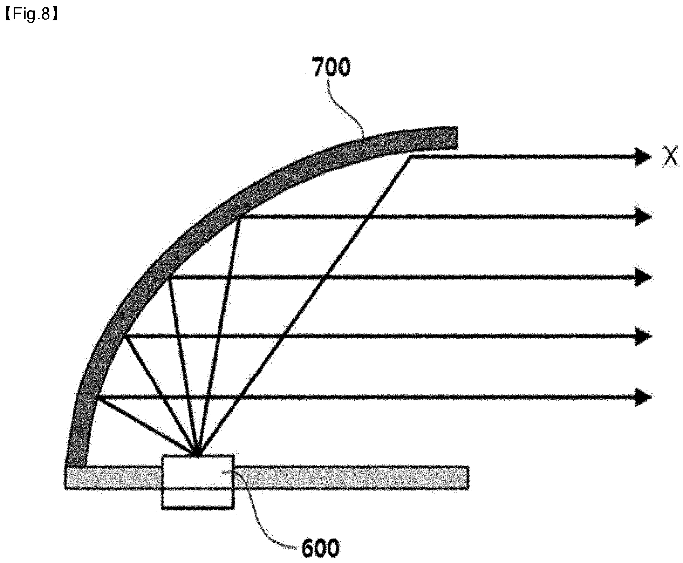

FIG. 8 is a conceptual view illustrating a vehicle head lamp in which the light emitting package 600 according to the embodiment as disclosed is utilized. Light emitted by the light emitting unit may be converted by the phosphor plate. In addition, the converted light may be transmitted to and reflected by a reflector 700 and emitted in a direction X. A reflecting member (not shown) is disposed on a rear surface of the light emitting unit so that some of the converted light transmitted toward the light emitting unit may be reflected by the reflecting member to return to the reflector 700 and be emitted.

## Claims

1. A phosphor plate (100) comprising a sintered layer (200) in which a mixture including an inorganic phosphor and glass frit is sintered,
wherein the sintered layer (200) further includes voids therein
**Characterized in that** a size of each of the voids ranges from 0.5 microns to 10 microns; and **in that**
the voids are included in the sintered layer (200) at a volume of 2% to 4% of a total volume of the sintered layer (200).

2. The phosphor plate (100) of claim 1, wherein the glass frit ranges from 20 to 50 parts by weight based on 100 parts by weight of the sintered layer (200).

3. The phosphor plate (100) of claim 1, wherein a thickness of the sintered layer (200) ranges from 100 µm to 200 µm.

4. A vehicle head lamp comprising:
a light emitting unit (400);
a phosphor plate (100) as claimed in claim 1 disposed on a light emitting path of the light emitting unit (400); and
a reflector (700) configured to reflect light converted and emitted by the phosphor plate (100).

5. The vehicle head lamp of claim 4, wherein the glass frit ranges from 20 to 50 parts by weight based on 100 parts by weight of the sintered layer (200).

6. The vehicle head lamp of claim 4, wherein a thickness of the sintered layer (200) ranges from 100 µm to 200 µm.

7. A manufacturing method of a phosphor plate (100) comprising:
mixing an inorganic phosphor, glass frit, a binder resin, and an additive to generate a mixture;
performing a burnout operation on the mixture to remove residual carbon and form circular voids; and
sintering the mixture, on which the burnout operation is performed, to form a sintered layer (200), wherein the burnout operation is performed at 200 °C to 500 °C in the formation of the voids, and wherein:
a size of each of the voids ranges from 0.5 microns to 10 microns; and
the voids are included in the sintered layer (200) at a volume of 2% to 4% of a total volume of the sintered layer(200).

8. The manufacturing method of claim 7, wherein the binder resin is one or more selected from among a polyvinyl alcohol (PVA)-based polymer, a polyvinyl butyral (PVB)-based polymer, and an acryl-based polymer.

9. The manufacturing method of claim 7, further comprising, after the generation of the mixture:
applying the mixture onto a polymer film;
drying the mixture applied onto the polymer film; and
removing the polymer film from the dried mixture.

10. The manufacturing method of claim 7, wherein a thickness of the sintered layer(200) ranges from 100 µm to 200 µm.

## Patentansprüche

1. Leuchtstoffplatte (100), die eine gesinterte Schicht (200) umfasst, in der eine Mischung, die einen anorganischen Leuchtstoff und eine Glasfritte umfasst, gesintert ist,
wobei die gesinterte Schicht (200) ferner Hohlräume darin umfasst,
**dadurch gekennzeichnet, dass** eine Größe jedes der Hohlräume im Bereich von 0,5 Mikrometer bis 10 Mikrometer liegt; und dass
die Hohlräume in der gesinterten Schicht (200) mit einem Volumen von 2 % bis 4 % eines Gesamtvolumens der gesinterten Schicht (200) enthalten sind.

2. Leuchtstoffplatte (100) nach Anspruch 1, wobei die Glasfritte im Bereich von 20 bis 50 Gewichtsteilen, basierend auf 100 Gewichtsteilen der gesinterten Schicht (200), liegt.

3. Leuchtstoffplatte (100) nach Anspruch 1, wobei eine Dicke der gesinterten Schicht (200) im Bereich von 100 µm bis 200 µm liegt.

4. Fahrzeugscheinwerfer, umfassend:
eine Lichtemittierungseinheit (400);
eine Leuchtstoffplatte (100) wie in Anspruch 1 beansprucht, die in einem Lichtemittierungsweg der Lichtemittierungseinheit (400) angeordnet ist; und
einen Reflektor (700), der dazu konfiguriert ist, das von der Leuchtstoffplatte (100) konvertierte und emittierte Licht zu reflektieren.

5. Fahrzeugscheinwerfer nach Anspruch 4, wobei die Glasfritte im Bereich von 20 bis 50 Gewichtsteilen, basierend auf 100 Gewichtsteilen der gesinterten Schicht (200), liegt.

6. Fahrzeugscheinwerfer nach Anspruch 4, wobei eine Dicke der gesinterten Schicht (200) im Bereich von 100 µm bis 200 µm liegt.

7. Verfahren zum Herstellen einer Leuchtstoffplatte (100), umfassend:
Mischen eines anorganischen Leuchtstoffs, einer Glasfritte, eines Bindemittelharzes und eines Additivs, um eine Mischung zu erzeugen;
Durchführen eines Ausbrennvorgangs an der Mischung, um Restkohlenstoff zu entfernen und kreisförmige Hohlräume zu bilden; und
Sintern der Mischung, an der der Ausbrennvorgang durchgeführt wird, um eine gesinterte Schicht (200) zu bilden, wobei der Ausbrennvorgang zur Bildung der Hohlräume bei 200 °C bis 500 °C durchgeführt wird, und wobei
eine Größe jedes der Hohlräume im Bereich von 0,5 Mikrometer bis 10 Mikrometer liegt; und
die Hohlräume in der gesinterten Schicht (200) mit einem Volumen von 2 % bis 4 % eines Gesamtvolumens der gesinterten Schicht (200) enthalten sind.

8. Herstellungsverfahren nach Anspruch 7, wobei das Bindemittelharz eines oder mehrere ist, ausgewählt aus einem Polymer auf Polyvinylalkohol (PVA)-Basis, einem Polymer auf Polyvinylbutyral (PVB)-Basis und einem Polymer auf Acrylbasis.

9. Herstellungsverfahren nach Anspruch 7, das nach der Erzeugung der Mischung ferner umfasst:
Aufbringen der Mischung auf eine Polymerfolie;
Trocknen der auf die Polymerfolie aufgebrachten Mischung; und
Entfernen der Polymerfolie von der getrockneten Mischung.

10. Herstellungsverfahren nach Anspruch 7, wobei eine Dicke der gesinterten Schicht (200) im Bereich von 100 µm bis 200 µm liegt.

## Revendications

1. Une plaque de luminophore (100) comprenant une couche frittée (200) dans laquelle un mélange comprenant un luminophore inorganique et une fritte de verre est fritté,
dans laquelle la couche frittée (200) comprend en outre des vides dans celle-ci
**caractérisée en ce qu'**une taille de chacun des vides s'étend de 0,5 microns à 10 microns, et **en ce que**
les vides sont inclus dans la couche frittée (200) dans une proportion volumique de 2 % à 4 % du volume total de la couche frittée (200).

2. La plaque de luminophore (100) selon la revendication 1, dans laquelle la fritte de verre représente de 20 à 50 parties en poids pour 100 parties en poids de la couche frittée (200).

3. La plaque de luminophore (100) selon la revendication 1, dans laquelle l'épaisseur de la couche frittée (200) est comprise entre 100 µm et 200 µm.

4. Un phare de véhicule comprenant :
une unité d'émission de lumière (400) ;
une plaque de luminophore (100) selon la revendication 1 disposée sur un trajet d'émission de lumière de l'unité d'émission de lumière (400) ; et
un réflecteur (700) configuré pour réfléchir la lumière convertie et émise par la plaque de luminophore (100).

5. Le phare de véhicule selon la revendication 4, dans lequel la fritte de verre représente de 20 à 50 parties en poids pour 100 parties en poids de la couche frittée (200).

6. Le phare de véhicule selon la revendication 4, dans lequel l'épaisseur de la couche frittée (200) est comprise entre 100 µm et 200 µm.

7. Un procédé de fabrication d'une plaque de luminophore (100) comprenant :
le mélange d'un luminophore inorganique, d'une fritte de verre, d'une résine liante et d'un additif pour générer un mélange ;
la réalisation d'une opération de déliantage sur le mélange pour éliminer le carbone résiduel et former des vides circulaires ; et
le frittage du mélange, sur lequel l'opération de déliantage est réalisée, pour former une couche frittée (200), dans lequel l'opération de déliantage est réalisée à une température de 200 °C à 500 °C lors de la formation des vides, et dans lequel :
une taille de chacun des vides est comprise entre 0,5 microns et 10 microns ; et
les vides sont inclus dans la couche frittée (200) dans une proportion volumique de 2 % à 4 % du volume total de la couche frittée (200).

8. Le procédé de fabrication selon la revendication 7, dans lequel la résine liante est une ou plusieurs sélectionnées parmi un polymère à base d'alcool polyvinylique (PVA), un polymère à base de polybutyral de vinyle (PVB) et un polymère à base d'acrylique.

9. Le procédé de fabrication selon la revendication 7, comprenant en outre, après la génération du mélange :
l'application du mélange sur un film polymère ;
le séchage du mélange appliqué sur le film polymère ; et
le retrait du film polymère du mélange séché.

10. Le procédé de fabrication selon la revendication 7, dans lequel l'épaisseur de la couche frittée (200) est comprise entre 100 µm et 200 µm.
